# EUROPEAN PATENT SPECIFICATION

(11) **EP 2 613 271 B1**
(45) Date of publication and mention of the grant of the patent: **02.12.2020**
(21) Application number: 12150502.8
(22) Date of filing: 09.01.2012
(51) Int. Cl.: G06F 16/27

(54) **Method and apparatus for database augmentation and multi-word substitution**
Verfahren und Vorrichtung zur Datenbankvergrößerung und zum Austausch von mehreren Wörtern
Procédé et appareil pour l'augmentation de la base de données et remplacement de plusieurs mots

(43) Date of publication of application: 10.07.2013
(73) Proprietor: BlackBerry Limited, Waterloo, ON N2K 0A7 (CA)
(72) Inventor: Dent, Terrill Mark, Waterloo, Ontario N2L 3W8 (CA); Little, Herbert Anthony, Waterloo, Ontario N2L 3W8 (CA); Brown, Michael Stephen, Waterloo, Ontario N2L 3W8 (CA)
(74) Representative: Vigand, Philippe

(56) References cited:
- WO-A2-2009/154980
- GB-A- 2 480 649
- US-A1- 2008 313 182
- US-A1- 2010 318 346

## Description

### FIELD

Example embodiments relate to database augmentation using linguistic data stored on a device, and utilizing a database stored on a device to perform multi-word substitution.

### BACKGROUND

Before a communication device is first used by a user, the device may be loaded with a database that provides a list of default words. The database may be used for a variety of purposes such as spelling corrections and spelling predictions. For example, if the device receives text, the device may determine whether any words in the text are misspelled using the database of words. If the device determines that any words in the text are misspelled, the device may attempt to correct the misspelled words using the database of words.

One difficulty with storing a database of default words is that it may not learn from a user's activities on a device. For example, if a user inputs the text "John" into a device, the device may determine that "John" is a misspelled word, without recognizing that the user added "John" as a contact in a contact database in the device. Thus, in the example, a user who enters, and intends to enter, the text "John" may receive an indication that "John" is a misspelled word.

Another difficulty with storing a database of default words is that it may not accurately account for groups of words. For example, even if the common name "John" is included in the database of default words, if a user inputs the text "John Dor" into a device, the device may determine that "Dor" is a misspelled word. In the example, when the device determines that "Dor" is a misspelled word, it may analyze the database for single words that could replace "Dor" (for example, "Door"), without recognizing that the user intended to enter "John Doe" and the user had previously added "John Doe" as a contact in a contact database in the device.

Accordingly, existing techniques of maintaining and using linguistic object databases suffer from drawbacks that limit their breadth and accuracy.

GB2480649 is directed togenerating an audio database of pronounced words of a user in a language and relates to a system and method for finding one or more correction candidates given a misspelled word in a language, the system comprising a first input, wherein the first input is an audio signal from a first database of audio recordings of words spoken in the language; and a second input, wherein the second input is an audio signal from a second database of audio recordings of phones and diphones spoken in the language; a third input which is a misspelled word in text; a processor, wherein the processor generates an audio signal for the misspelled word using the audio recordings of phones and diphones stored in the first database and the processor compares the audio signal of the misspelled word to the audio recordings of words in the second database and outputs at least one possible correction for the misspelled word.

Us2008313182A1 discloses a method to update a text dictionary database in a device with contact names from a database in a SIM card. The invention is set out in the claims.

### BRIEF DESCRIPTION OF THE DRAWINGS

Reference will now be made to the accompanying drawings showing example embodiments of this disclosure. In the drawings:
**Figure 1** is a simplified block diagram illustrating an example mobile communication device in accordance with an example embodiment.
**Figure 2** is a flow diagram of an example method for updating a database comprising linguistic objects and using the updated database for spelling correction, in accordance with an example embodiment.
**Figure 3** is a flow diagram of an example method for multi-word spelling correction, in accordance with an example embodiment.
**Figure 4** is a flow diagram of an example method for updating a first database comprising linguistic objects in a first device using data stored in a second database in a second device, in accordance with an example embodiment.
**Figure 5** is a flow diagram of an example method for updating a first database comprising linguistic objects in a device using data stored in a second database while an application is running on the first device, in accordance with an example embodiment.
**Figure 6** is a simplified block diagram illustrating an example communication link between two devices in accordance with an example embodiment.
**Figure 7** is a simplified block diagram illustrating an example database in accordance with an example embodiment.

### DESCRIPTION OF EXAMPLE EMBODIMENTS

In one disclosed embodiment, a method is performed by a communication device having an input apparatus and a memory, wherein the memory has stored therein a first database comprising a plurality of linguistic objects. The method includes monitoring a second database for the addition of one or more linguistic objects. The method further determines if one or more linguistic objects have been added to the second database, and upon such a determination updates the first database to include the one or more linguistic objects added to the second database. The method further includes receiving one or more words via the input apparatus. The method further includes comparing the one or more words to two or more linguistic objects in the first database to determine whether at least some of the one or more words should be replaced with at least some of the two or more linguistic objects in the first database.

In another disclosed embodiment, a communication device is provided. The communication device includes an input apparatus, one or more processors, and one or more memories. The communication device further includes instructions stored on the one or more memories, which, when executed by the one or more processors, cause the communication device to monitor a second database for the addition of one or more linguistic objects, determine if one or more linguistic objects have been added to the second database, and upon such a determination update the first database to include the one or more linguistic objects added to the second database, receive one or more words via the input apparatus, and compare the one or more words to two or more linguistic objects in the first database to determine whether at least some of the one or more words should be replaced with at least some of the two or more linguistic objects in the first database.

The following detailed description refers to the accompanying drawings. Wherever possible, the same reference numbers are used in the drawings and the following description to refer to the same or similar parts. While several example embodiments are described herein, modifications, adaptations, and other implementations are possible. For example, substitutions, additions, or modifications can be made to the components illustrated in the drawings, and the example methods described herein can be modified by substituting, reordering, or adding steps to the disclosed methods. Accordingly, the foregoing general description and the following detailed description are example and explanatory only and are not limiting. Instead, the proper scope is defined by the appended claims.

In addition, numerous specific details are set forth in order to provide a thorough understanding of the example embodiments described herein. However, it will be understood by those of ordinary skill in the art that the example embodiments described herein can be practiced without these specific details. Furthermore, well-known methods, procedures and components have not been described in detail so as not to obscure the example embodiments described herein.

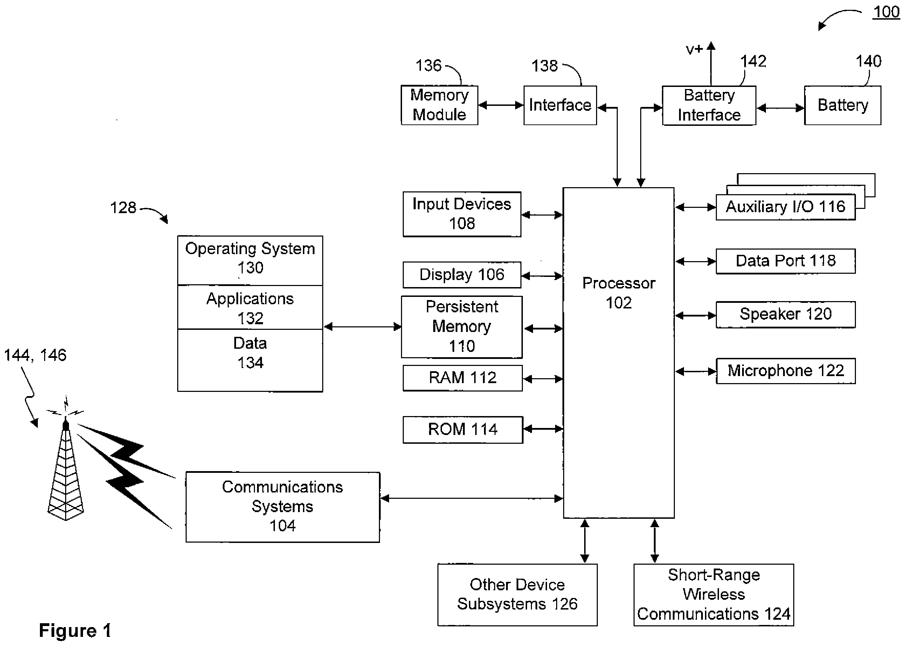

Reference is now made to **Figure 1**, which illustrates in detail example communication device 100 in which example embodiments can be applied. Communication device 100 is a two-way communication device having data and voice communication capabilities, and the capability to communicate with other computer systems, for example, via the Internet. Depending on the functionality provided by communication device 100, in various embodiments communication device 100 can be a handheld device, a multiple-mode communication device configured for both data and voice communication, a smartphone, a mobile telephone, a netbook, a gaming console, a tablet, or a PDA (personal digital assistant) enabled for wireless communication.

Communication device 100 includes a case (not shown) housing the components of communication device 100. The internal components of communication device 100 can, for example, be constructed on a printed circuit board (PCB). The description of communication device 100 herein mentions a number of specific components and subsystems. Although these components and subsystems can be realized as discrete elements, the functions of the components and subsystems can also be realized by integrating, combining, or packaging one or more elements in any suitable fashion.

Communication device 100 includes a controller comprising at least one processor 102 (such as a microprocessor), which controls the overall operation of communication device 100. Processor 102 can be a single microprocessor, multiple microprocessors, field programmable gate arrays (FPGAs), digital signal processors (DSPs) capable of executing particular sets of instructions, or any circuit capable of electrically coupling the device subsystems. Processor 102 interacts with device subsystems such as a communication system 104 for exchanging radio frequency signals with the wireless network (for example WAN 144 and/or PLMN 146) to perform communication functions.

Processor 102 also interacts with additional device subsystems including a display 106 such as a liquid crystal display (LCD) screen or any other appropriate display, input devices 108 such as a keyboard and control buttons, persistent memory 110, random access memory (RAM) 112, read only memory (ROM) 114, auxiliary input/output (I/O) subsystems 116, data port 118 such as a conventional serial data port or a Universal Serial Bus (USB) data port, speaker 120, microphone 122, short-range wireless communications subsystem 124 (which can employ any appropriate wireless (for example, RF), optical, or other short range communications technology), and other device subsystems generally designated as 126. Some of the subsystems shown in Figure 1 perform communication-related functions, whereas other subsystems can provide "resident" or on-device functions.

Display 106 can be realized as a touch-screen display in some embodiments. The touch-screen display can be constructed using a touch-sensitive input surface coupled to an electronic controller and which overlays the visible element of display 106. The touch-sensitive overlay and the electronic controller provide a touch-sensitive input device and processor 102 interacts with the touch-sensitive overlay via the electronic controller.

Communication system 104 includes one or more communication systems for communicating with wireless WAN 144 and wireless access points within the wireless network. The particular design of communication system 104 depends on the wireless network in which communication device 100 is intended to operate. Communication device 100 can send and receive communication signals over the wireless network after the required network registration or activation procedures have been completed.

Processor 102 operates under stored program control and executes software modules 128 stored in a tangible non-transitory computer-readable storage medium such as persistent memory 110, which can be a flexible disk, a hard disk, a CD-ROM (compact disk-read only memory), a MO (magneto-optical) disk, a DVD-ROM (digital versatile disk-read only memory), a DVD RAM (digital versatile disk-random access memory), or a semiconductor memory. Software modules 128 can also be stored in a computer-readable storage medium such as ROM 114, or any appropriate persistent memory technology, including EEPROM, EAROM, and FLASH. These computer-readable storage mediums store computer-readable instructions for execution by processor 102 to perform a variety of functions on communication device 100.

Software modules 128 can include operating system software 130, used to control operation of communication device 100. Additionally, software modules 128 can include software applications 132 for providing additional functionality to communication device 100. For example, communication device 100 can include a database updating application for adding new words or groups of words to a database stored on the communication device 100.

Software applications 132 can further include a range of applications, including, for example, e-mail messaging application, address book, notepad application, Internet browser application, voice communication (i.e., telephony) application, mapping application, or a media player application, or any combination thereof. Each of software applications 132 can include layout information defining the placement of particular fields and graphic elements (for example, text fields, input fields, icons, etc.) in the user interface (i.e., display 106) according to the application.

In some embodiments, persistent memory 110 stores data 134, including linguistic data stored in a database structure. The linguistic data may include default linguistic data, such as words and/or groups of words, with a corresponding number for each word or group of words indicating the number of words in the word or group of words. The linguistic data may also include custom linguistic data, such as words or groups of words previously entered by the user. The linguistic data may also include data relating to various contacts (i.e., people, companies, or other entities that the user may contact or has previously contacted), for example, a name of a contact, a contact's identifier (user name, email address, or any other identifier), a place of employment, a phone number, a physical address, or other types of contact-specific information. The linguistic data may also include data acquired from a device other than communication device 100. When text is input to the communication device 100, the database structure may be accessed to provide spelling corrections or spelling suggestions. Persistent memory 110 can further store data relating applications with the particular user of, for example, communication device 100. In certain embodiments, data 134 also includes service data comprising information required by communication device 100 to establish and maintain communication with the wireless network (for example WAN 144 and/or PLMN 146.

In some embodiments, auxiliary input/output (I/O) subsystems 116 comprise an external communication link or interface, for example, an Ethernet connection. In some embodiments, auxiliary I/O subsystems 116 can further comprise one or more input devices, including a pointing or navigational tool such as a clickable trackball or scroll wheel or thumbwheel, or one or more output devices, including a mechanical transducer such as a vibrator for providing vibratory notifications in response to various events on communication device 100 (for example, receipt of an electronic message or incoming phone call), or for other purposes such as haptic feedback (touch feedback).

In some embodiments, communication device 100 also includes one or more removable memory modules 136 (typically comprising FLASH memory) and a memory module interface 138. Among possible functions of removable memory module 136 is to store information used to identify or authenticate a user or the user's account to a wireless network (for example WAN 144 or PLMN 146). For example, in conjunction with certain types of wireless networks, including GSM and successor networks, removable memory module 136 is referred to as a Subscriber Identity Module (SIM). Memory module 136 is inserted in or coupled to memory module interface 138 of communication device 100 in order to operate in conjunction with the wireless network.

Communication device 100 also includes a battery 140 which furnishes energy for operating communication device 100. Battery 140 can be coupled to the electrical circuitry of communication device 100 through a battery interface 142, which can manage such functions as charging battery 140 from an external power source (not shown) and the distribution of energy to various loads within or coupled to communication device 100. Short-range wireless communications subsystem 124 is an additional optional component that provides for communication between communication device 100 and different systems or devices, which need not necessarily be similar devices. For example, short-range wireless communications subsystem 124 can include an infrared device and associated circuits and components, or a wireless bus protocol compliant communication device such as a BLUETOOTH® communication module to provide for communication with similarly-enabled systems and devices.

A predetermined set of applications that control basic device operations, including data and possibly voice communication applications can be installed on communication device 100 during or after manufacture. Additional applications or upgrades to operating system software 130 or software applications 132 can also be loaded onto communication device 100 through the wireless network (for example WAN 144 and/or PLMN 146), auxiliary I/O subsystem 116, data port 118, short-range wireless communication subsystem 124, or other suitable subsystems 126. The downloaded programs or code modules can be permanently installed, for example, written into the persistent memory 110, or written into and executed from RAM 112 for execution by processor 102 at runtime.

Communication device 100 can provide three principal modes of communication: a data communication mode, a voice communication mode, and a video communication mode. In the data communication mode, a received data signal such as a text message, an e-mail message, Web page download, or an image file are processed by communication system 104 and input to processor 102 for further processing. For example, a downloaded Web page can be further processed by a browser application, or an e-mail message can be processed by an e-mail message messaging application and output to display 106. A user of communication device 100 can also compose data items, such as e-mail messages, for example, using the input devices, such as auxiliary I/O subsystem 116, in conjunction with display 106. These composed items can be transmitted through communication system 104 over the wireless network (for example WAN 144 or PLMN 146). In the voice communication mode, communication device 100 provides telephony functions and operates as a typical cellular phone. In the video communication mode, communication device 100 provides video telephony functions and operates as a video teleconference terminal. In the video communication mode, communication device 100 utilizes one or more cameras (not shown) to capture video of video teleconference.

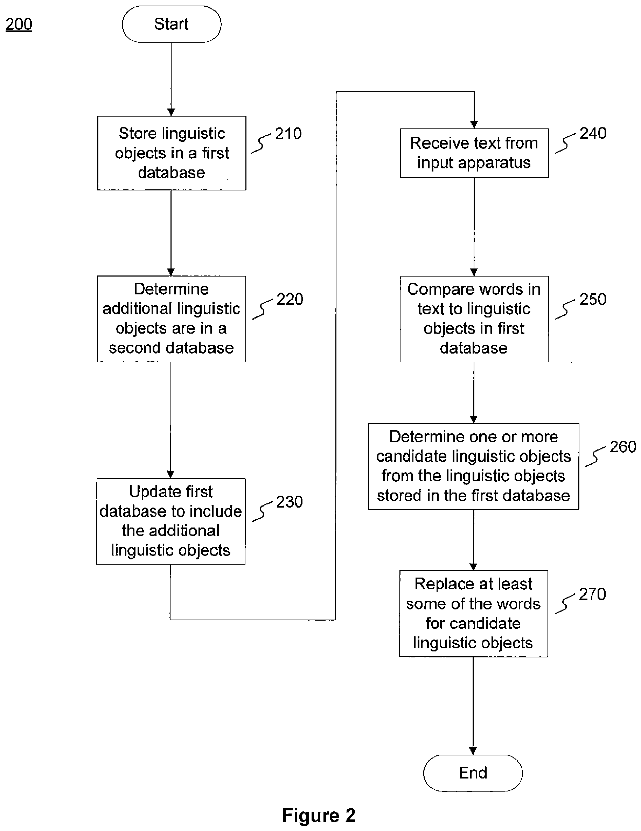

Reference is now made to **Figure 2****,** which depicts a flow diagram of an example method 200 for updating a first database comprising linguistic objects in a communication device and using the updated database for spelling correction. The method begins by storing one or more linguistic objects in a first database (step 210). A linguistic object may include a word or a group of words (multi-word). For purposes of the discussion below, a "word" may be any combination of consecutive characters or symbols. The linguistic objects stored in the first database in step 210 may be loaded onto the device 100 before a user has access to the device 100, or may be downloaded onto the device 100 at any time.

Some time after the first database is loaded onto the device 100, a determination may be made that one or more additional linguistic objects are located in a second database (step 220). If the second database has not previously been examined, the second database may be searched for any additional linguistic objects not included in the first database. If the second database has previously been examined, the second database may be monitored for changes, such that if a new linguistic object is added to the second database, once the change is detected the new linguistic object will be added to the first database. In some embodiments, the second database could also be monitored for linguistic object deletions, such that when a linguistic object is removed from the second database, once the change is detected the deleted linguistic object will be removed from the first database. Whereas the first database is included in the communication device, the second database may be included in the communication device or may be included in a second device. The second database may be a contact database that includes data relating to various contacts (i.e., people, companies, or other entities that a user may contact or has previously contacted), for example, a name of a contact, a contact's identifier (user name, email address, or any other identifier), a place of employment, a phone number, a physical address, or other types of contact-specific information. In some embodiments only the name field in the contact database would be monitored, whereas in other embodiments a plurality of the fields in the contact database would be monitored.

After determining that additional linguistic objects are in the second database, the first database will be updated to include the additional linguistic objects (step 230).

After the first database is updated to include the additional linguistic objects, the device may receive text from an input apparatus, such as communications systems 104, input devices 108, auxiliary I/O 116, data port 118, microphone 122, wireless communications 124, or other device subsystems 126 (step 240). If the input apparatus is a microphone, the received text may be obtained by performing a speech-to-text operation.

Once the device receives text, the device will compare words in the received text to linguistic objects in the first database (step 250). In some embodiments, words are found in the received text by locating spaces, such that spaces separate words. However, it will be appreciated that in other embodiments words may be found in the received text by locating a plurality of predetermined symbols that separate words, including one or more of: spaces, hyphens, periods, slashes, back slashes, and ampersats (that is, "@" symbols). Upon comparing words in the received text to linguistic objects in the first database, linguistic objects in the first database that have a likelihood of being intended linguistic objects above a threshold are labeled as candidate linguistic objects (step 260).

After comparing words in the received text to linguistic objects in the first database and determining candidate linguistic objects, at least some of the one or more words may be replaced with at least some of the candidate linguistic objects (step 270). In some embodiments, the most likely candidate linguistic object will automatically replace the one or more words. In other embodiments, the one or more candidate linguistic objects are output, for example using display 106 or speaker 120, for a user to choose a given candidate linguistic object for replacement or to choose not to replace the one or more words in the received text.

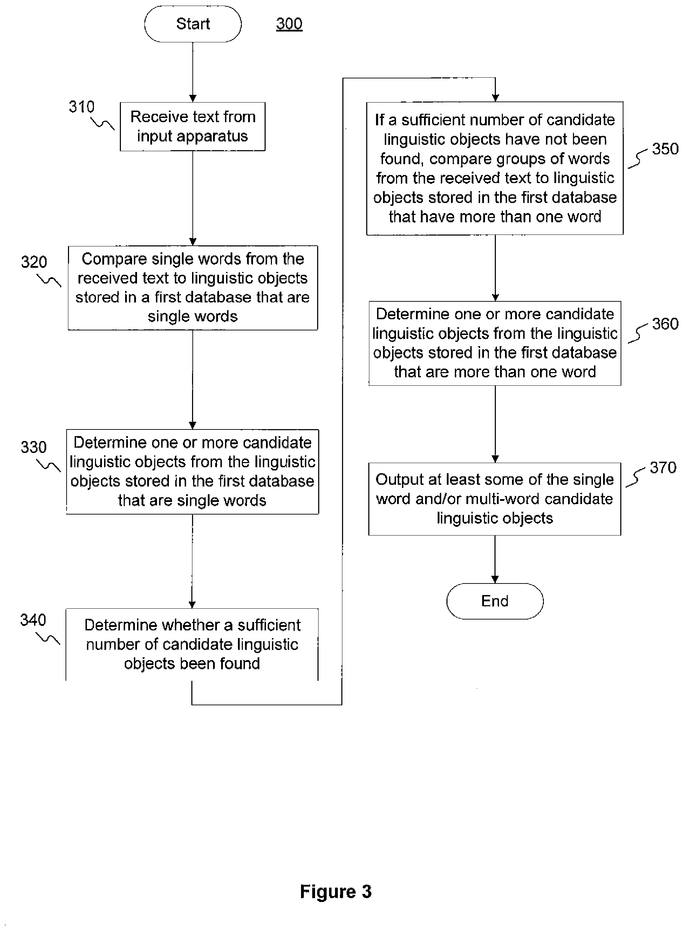

Reference is now made to **Figure 3****,** which depicts a flow diagram of an example method 300 for multi-word spelling correction. The method begins by receiving text from an input apparatus (step 310) in a manner as described above as to step 240 of **Figure 2****.** Once text has been received, single words in the text may be compared to linguistic objects stored in a first database that are single words (step 320). In some embodiments, only the most recent word in the received text will be compared to linguistic objects in the first database. In other embodiments, some or all of the words in the received text will be compared to linguistic objects in the first database. If no single word linguistic objects stored in the first database exist, or none are found, the method will jump to step 350.

If at least one single word linguistic object stored in the first database is found, single word linguistic objects in the first database that have a likelihood of being intended linguistic objects above a threshold are labeled as candidate linguistic objects (step 330). The likelihood of being an intended linguistic object may be calculated in a number of ways, such as by calculating a character distance between characters of a word in the received text and characters of a linguistic object in the first database or by calculating a frequency of use of a linguistic object in the first database.

A determination will then be made as to whether a sufficient number of candidate linguistic objects have been found (step 340). A "sufficient number" may be representative of a predetermined fixed number of candidate linguistic objects. Alternatively, a "sufficient number" may change based on the likelihood of a candidate linguistic object being the intended linguistic object, such that if the likelihood is high, the "sufficient number" is lower, and if the likelihood is low, the "sufficient number" is higher. For example, the probability of each of the candidate linguistic objects being the intended linguistic object may be calculated; then, the probability of each candidate linguistic object not being the intended linguistic object may be calculated by subtracting each probability value from the value "1"; then, the probability of none of the candidate linguistic objects being the intended linguistic object may be calculated by multiplying together each probability of a given candidate linguistic object not being the intended linguistic object; then the probability of none of the candidate linguistic objects being the intended linguistic object may be compared to a predetermined threshold such that if the probability is less than the predetermined threshold, a "sufficient number" of candidate linguistic objects have been obtained, whereas if the probability is greater than or equal to the predetermined threshold, a "sufficient number" of candidate linguistic objects have not been obtained. In some embodiments, step 340 is skipped such that the method will always continue to step 350 to analyze multi-words.

If a sufficient number of single word candidate linguistic objects have not been found, groups of words in the text may be compared to linguistic objects stored in a first database that have more than one word (step 350). In some embodiments, only the most recent group of words in the received text will be compared to linguistic objects in the first database. For example, if two-word linguistic objects in the first database are being analyzed, the most recent two words in the received text will be compared, and if three-word linguistic objects in the first database are being analyzed, the most recent three words in the received text will be compared. In other embodiments, some or all of the possible groups of words in the received text will be compared to linguistic objects in the first database. If no multi-word linguistic objects stored in the first database exist, or none are found, the method will jump to step 370.

If at least one multi-word linguistic object stored in the first database is found, multi-word linguistic objects in the first database that have a likelihood of being intended linguistic objects above a threshold are labeled as candidate linguistic objects (step 360).

While method 300 depicts a search for single word candidate linguistic objects followed by a search for multi-word candidate linguistic objects, it will be appreciated that the operations could occur in either order (that is, steps 350-360 and steps 320-330 could swap places). In addition, while the multi-word candidate linguistic object search (steps 350-360) is depicted as being a search for any candidate linguistic objects having more than one word, the search could be performed separately for linguistic objects in the first database having a different number of words. For example, the method could first search for single word candidate linguistic objects, than two-word candidate linguistic objects, than three-word candidate linguistic objects, than four-word candidate linguistic objects, etc.

Once single word and multi-word candidate linguistic objects are found, the candidate linguistic objects may be output (step 370). In some embodiments, the most likely candidate linguistic object will automatically replace the one or more words. In other embodiments, the one or more candidate linguistic objects are output, for example using display 106 or speaker 120, for a user to choose a given candidate linguistic object for replacement or to choose not to replace the one or more words in the received text.

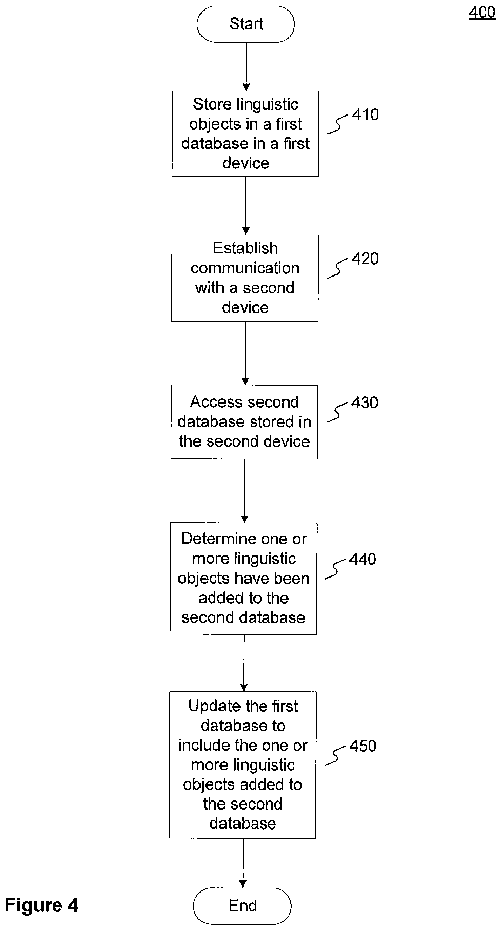

Reference is now made to **Figure 4****,** which depicts a flow diagram of an example method for updating a first database comprising linguistic objects in a first device using data stored in a second database in a second device, in accordance with an example embodiment. The method begins by storing one or more linguistic objects in a first database in a first device (step 410), in a manner as described in regards to step 210 of **Figure 2****.**

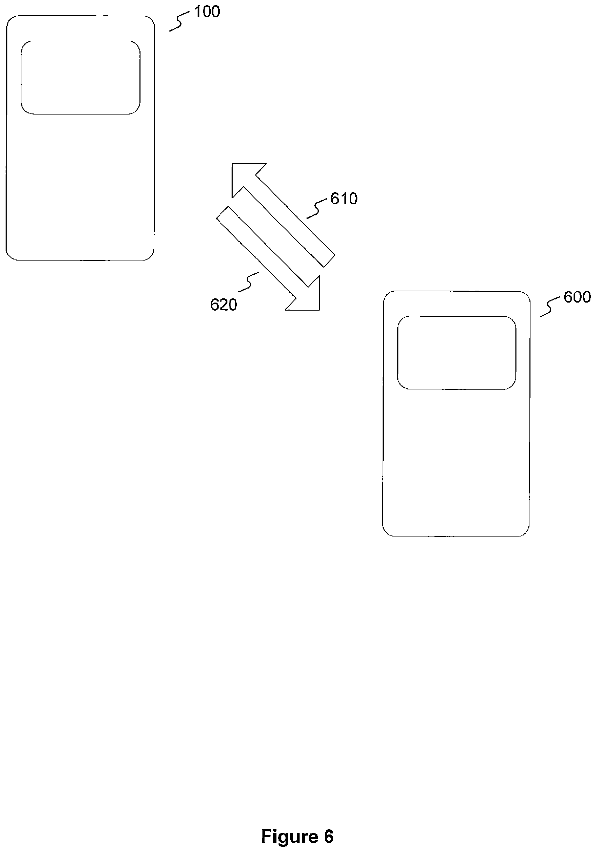

Sometime after step 410, the first device will establish communication with a second device (step 420). An example of such communication is depicted in Figure 6, where device 100 is communicating with device 600. Device 600 may be a handheld device, a multiple-mode communication device configured for both data and voice communication, a smartphone, a mobile telephone, a netbook, a gaming console, a tablet, or a PDA (personal digital assistant) enabled for wireless communication. Device 100 may send queries 620 to device 600. In addition, device 100 may receive data from device 600.

After the first and second device establish communication, a second database stored in the second device may be accessed (step 430). For instance, in the example depicted in **Figure 6****,** when device 100 sends a query 620 to device 600, the query may indicate to device 600 to access a database stored in device 600.

Once the second database is accessed, a determination may be made as to whether one or more linguistic objects have been added to the second database (step 440). Optionally, the first time the first and second devices are communicating, the determination may be made by assuming that all linguistic objects in the second database have been added. Alternatively, the determination may find linguistic objects in the second database that are not in the first database. Alternatively, the determination may find linguistic objects in the second database that have been added since the last time the first and second devices have communicated.

Once one or more linguistic objects have been identified as having been added to the second database, the second device may transmit data regarding the one or more linguistic objects to the first device. Once the data is received by the first device, the first device may update the first database using the received data to include the one or more linguistic objects that have been identified as having been added to the second database. In some embodiments, the first device may first determine whether any of the one or more linguistic objects that have been identified as having been added to the second database are already in the first database to prevent duplicate entries in the first database.

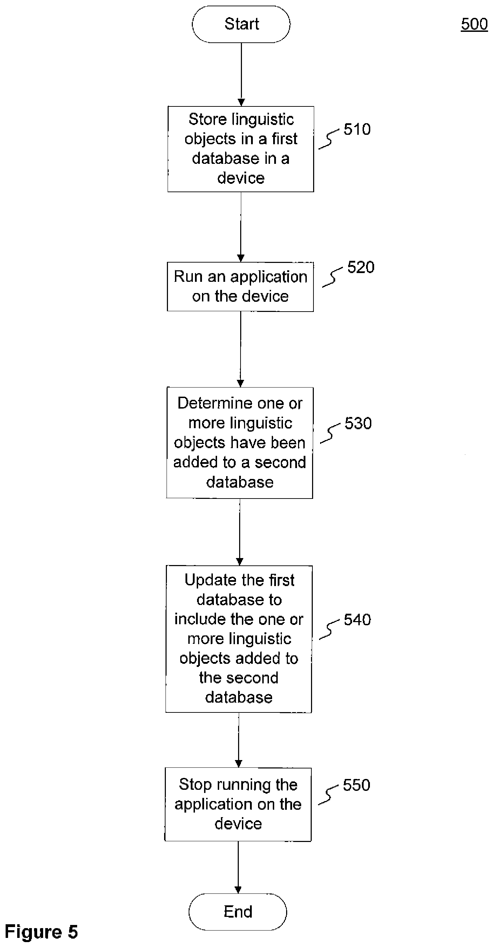

Reference is now made to **Figure 5****,** which depicts a flow diagram of an example method for updating a first database comprising linguistic objects in a device using data stored in a second database while an application is running on the first device. The method begins by storing one or more linguistic objects in a first database in a first device (step 510), in a manner as described in regards to step 210 of **Figure 2****.**

Sometime after step 510, an application will be initiated in the device (step 520). The application could be any application capable of being executed on the device, including an application that utilizes the first database for spell checking, spelling correction, and spelling suggestion.

After initiating the application, a determination may be made that one or more linguistic objects have been added to a second database (step 530), and the first database may be updated to include the one or more linguistic objects added to the second database (step 540). The second database may be located on a second device, in which case steps 530-540 would be performed in a manner as described above in regards to steps 430-450 of **Figure 4****.** Alternatively, the second database may be located on the same device as the first database.

Following step 540, the updated first database could be used by the application that was previously initiated without restarting the application. For example, method 300 of **Figure 3** could be performed following step 540.

Some time after step 540, the application running on the device may be stopped (step 550).

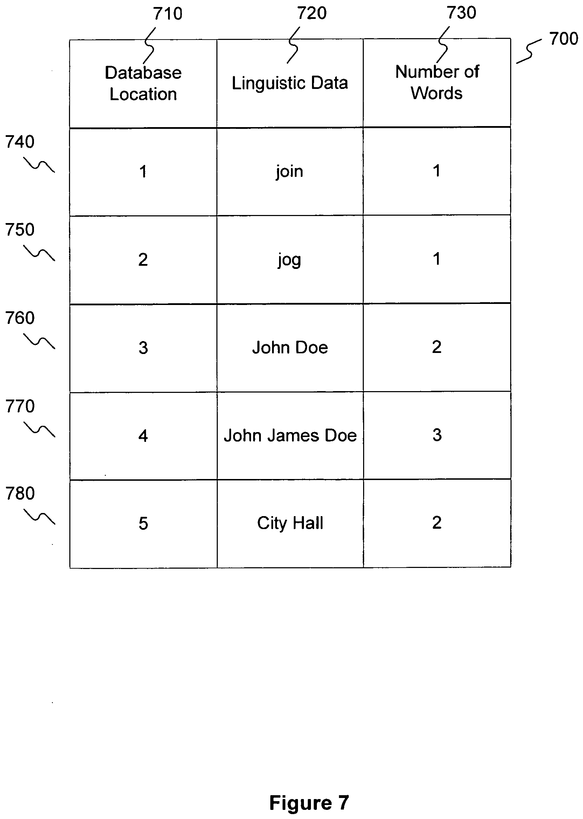

As indicated above, persistent memory 110 may contain a database structure comprising linguistic data. Reference is now made to Figure 7, which depicts an example database structure 700. Each entry in database structure 700 is depicted as comprising a Database Location field 710, a Linguistic Data field 720, and a Number of Words field 730. However, it will be appreciated that in some embodiments a Database Location field 710 and/or a Number of Words field 730 would not be included in the database structure.

Entry 740 is located at a first position in the database structure 700 and provides for the word "join" in its linguistic data. Since the linguistic data "join" represents a single word, the number "1" is indicated in the Number of Words field. In this example, "join" may represent default linguistic data that is included in the database structure 700 without any action by the user. It will be appreciated that the characters used to depict the entries in database structure 700 are used for illustrative purposes only, and that when implemented in communication device 100 the entries could be encoded using a variety of techniques. Entry 750 depicts another single word entry in database structure 700 that is located at a second position in the database structure 700.

Entry 760 is located at a third position in the database structure 700 and provides for the two words "John Doe" in its linguistic data. Thus, since "John Doe" comprises two words, the number "2" is indicated in the Number of Words field. In this example, "John Doe" may represent a person's name that was retrieved from a contact list database and not part of the default linguistic data.

Entry 770 is located at a fourth position in the database structure 700 and provides for the three words "John James Doe" in its linguistic data. Thus, since "John James Doe" comprises three words, the number "3" is indicated in the Number of Words field. In this example, "John James Doe" may represent a person's name that was retrieved from a contact list database and not part of the default linguistic data.

Entry 780 is located at a fifth position in the database structure 700 and provides for the two words "City Hall" in its linguistic data. Thus, since "City Hall" comprises two words, the number "2" is indicated in the Number of Words field. In this example, "City Hall" may represent an office's name that was retrieved from a contact list database and not part of the default linguistic data.

While the above description provides examples of one or more processes or apparatuses, it will be appreciated that other processes or apparatuses can be within the scope of the accompanying claims.

The foregoing description has been presented for purposes of illustration. It is not exhaustive and is not limited to the precise forms or embodiments disclosed. Modifications and adaptations of the embodiments will be apparent from consideration of the specification and practice of the disclosed embodiments. For example, the described implementations include hardware and software, but systems and methods consistent with the present disclosure can be implemented as hardware alone.

Computer programs based on the written description and methods of this specification are within the skill of a software developer. The various programs or program modules can be created using a variety of programming techniques. For example, program sections or program modules can be designed in or by means of Java, C, C++, assembly language, or any such programming languages. One or more of such software sections or modules can be integrated into a computer system or existing communications software.

Moreover, while illustrative embodiments have been described herein, the scope includes any and all embodiments having equivalent elements, modifications, omissions, combinations (e.g., of aspects across various embodiments), adaptations and/or alterations based on the present disclosure. The elements in the claims are to be interpreted broadly based on the language employed in the claims and not limited to examples described in the present specification or during the prosecution of the application, which examples are to be construed as non-exclusive. Further, the steps of the disclosed methods can be modified in any manner, including by reordering steps and/or inserting or deleting steps. It is intended, therefore, that the specification and examples be considered as example only, with a true scope being indicated by the following claims.

## Claims

1. A method performed by a first communication device (100), the first communication device having an input apparatus (104, 108, 116, 118, 122, 124, 126) and a memory (110, 114), wherein the memory has stored therein a first textual database comprising a plurality of linguistic objects, the method comprising:
monitoring a second textual database for the removal of one or more linguistic objects wherein the second textual database is stored in a second communication device (600);
if one or more linguistic objects have been removed from the second textual database, updating the first textual database to exclude the one or more linguistic objects removed from the second textual database;
receiving one or more words via the input apparatus; and
comparing the one or more words to two or more linguistic objects in the first textual database to determine whether at least some of the one or more words should be replaced with at least some of the two or more linguistic objects in the first textual database,
wherein each linguistic object includes a respective word, each word being a combination of consecutive characters or symbols.

2. The method of claim 1, wherein at least some of the two or more linguistic objects in the first textual database comprise two or more words.

3. The method of claim 1, further comprising:
storing in the first textual database information representative of the number of words in a given linguistic object for at least some linguistic objects in the first textual database.

4. The method of claim 3, wherein the comparing of the one or more words to two or more linguistic objects in the first textual database is based at least in part on the information representative of the number of words in given linguistic objects.

5. The method of claim 4, wherein the comparing further comprises:
determining whether any linguistic objects in the first textual database are single words;
comparing single words from the one or more words received via the input apparatus to the linguistic objects stored in the first textual database that are single words; and
determining whether to output one or more candidate linguistic objects from the linguistic objects that are single words to replace at least some of the one or more words received via the input apparatus.

6. The method of claim 5, wherein the comparing further comprises:
determining whether a sufficient number of candidate linguistic objects are found from the linguistic objects that are single words; and
if an insufficient number of candidate linguistic objects are found from the linguistic objects that are single words, further performing:
determining whether any linguistic objects in the first textual database have more than one word;
comparing groups of words from the one or more words received via the input apparatus to the linguistic objects stored in the first textual database that have more than one word; and
determining whether to output one or more additional candidate linguistic objects from the linguistic objects that have more than one word to replace at least some of the one or more words received via the input apparatus.

7. The method of claim 1, further comprising:
running an application in the communication device;
performing the determining and the updating while running the application.

8. The method of claim 7, further comprising:
performing the determining, the updating, the receiving and the comparing while running the application.

9. The method of claim 1, wherein the comparing further comprises determining whether at least some of the two or more linguistic objects are more likely to represent an intended spelling than at least some of the one or more words received via the input apparatus.

10. A first communication device (100), the first communication device comprising:
an input apparatus (104, 108, 116, 118, 122, 124, 126);
one or more processors (102);
one or more memories (110, 114);
instructions (128) stored on the one or more memories, which, when executed by the one or more processors, cause the communication device to perform the steps of:
monitoring a second textual database for the removal of one or more linguistic objects wherein the second textual database is stored in a second communication device (600);
if one or more linguistic objects have been removed from the second textual database, updating the first textual database to exclude the one or more linguistic objects removed from the second textual database;
receiving one or more words via the input apparatus; and
comparing the one or more words to two or more linguistic objects in the first textual database to determine whether at least some of the one or more words should be replaced with at least some of the two or more linguistic objects in the first textual database,
wherein each linguistic object includes a respective word, each word being a combination of consecutive characters or symbols.

11. The communication device of claim 10, wherein at least some of the two or more linguistic objects in the first textual database comprise two or more words.

12. The communication device of claim 10, wherein the instructions stored on the one or more memories, when executed by the one or more processors, further cause the communication device to perform the step of:
storing in the first textual database information representative of the number of words in a given linguistic object for at least some linguistic objects in the first textual database.

13. The communication device of claim 12, wherein the comparing of the one or more words to two or more linguistic objects in the first textual database is based at least in part on the information representative of the number of words in given linguistic objects.

14. The communication device of claim 13, wherein the comparing further comprises:
determining whether any linguistic objects in the first textual database are single words;
comparing single words from the one or more words received via the input apparatus to the linguistic objects stored in the first textual database that are single words; and
determining whether to output one or more candidate linguistic objects from the linguistic objects that are single words to replace at least some of the one or more words received via the input apparatus.

15. The communication device of claim 14, wherein the comparing further comprises:
determining whether a sufficient number of candidate linguistic objects are found from the linguistic objects that are single words; and
if an insufficient number of candidate linguistic objects are found from the linguistic objects that are single words, further performing:
determining whether any linguistic objects in the first textual database have more than one word;
comparing groups of words from the one or more words received via the input apparatus to the linguistic objects stored in the first textual database that have more than one word; and
determining whether to output one or more additional candidate linguistic objects from the linguistic objects that have more than one word to replace at least some of the one or more words received via the input apparatus.

16. The communication device of claim 10, wherein the instructions stored on the one or more memories, when executed by the one or more processors, further cause the communication device to perform the steps of:
running an application in the communication device;
performing the determining and the updating while running the application.

17. The communication device of claim 16, wherein the instructions stored on the one or more memories, when executed by the one or more processors, further cause the communication device to perform the steps of:
performing the determining, the updating, the receiving and the comparing while running the application.

18. The communication device of claim 10, wherein the comparing further comprises determining whether at least some of the two or more linguistic objects are more likely to represent an intended spelling than at least some of the one or more words received via the input apparatus.

19. A computer readable medium comprising instructions, which, when executed by a computer, cause the computer to carry out the steps of the method of any of claims 1 to 9.

## Patentansprüche

1. Verfahren, das von einer ersten Kommunikationsvorrichtung (100) durchgeführt wird, wobei die erste Kommunikationsvorrichtung eine Eingabeeinrichtung (104, 108, 116, 118, 122, 124, 126) und einen Speicher (110, 114) aufweist, wobei im Speicher eine erste Textdatenbank gespeichert ist, die eine Vielzahl von linguistischen Objekten umfasst, wobei das Verfahren Folgendes umfasst:
Überwachen einer zweiten Textdatenbank auf das Entfernen von einem oder mehreren linguistischen Objekten, wobei die zweite Textdatenbank in einer zweiten Kommunikationsvorrichtung (600) gespeichert ist;
wenn ein oder mehrere linguistische Objekte aus der zweiten Textdatenbank entfernt wurden, Aktualisieren der ersten Textdatenbank derart, dass sie das eine oder die mehreren linguistischen Objekte, die aus der zweiten Textdatenbank entfernt wurden, nicht enthält;
Empfangen von einem oder mehreren Wörtern via die Eingabeeinrichtung; und
Vergleichen des einen oder der mehreren Wörter mit zwei oder mehreren linguistischen Objekten in der ersten Textdatenbank, um zu bestimmen, ob mindestens einige des einen oder der mehreren Wörter durch mindestens einige des einen oder der mehreren linguistischen Objekte in der ersten Textdatenbank ersetzt werden sollten,
wobei jedes linguistische Objekt ein jeweiliges Wort beinhaltet, wobei jedes Wort eine Kombination von aufeinanderfolgenden Zeichen oder Symbolen ist.

2. Verfahren nach Anspruch 1, wobei mindestens einige der zwei oder der mehreren linguistischen Objekte in der ersten Textdatenbank zwei oder mehrere Wörter umfassen.

3. Verfahren nach Anspruch 1, das ferner Folgendes umfasst:
Speichern von Informationen, die für die Anzahl von Wörtern in einem gegebenen linguistischen Objekt für mindestens einige linguistische Objekte in der ersten Textdatenbank repräsentativ sind, in der ersten Textdatenbank.

4. Verfahren nach Anspruch 3, wobei das Vergleichen des einen oder der mehreren Wörter mit zwei oder mehreren linguistischen Objekten in der ersten Textdatenbank mindestens teilweise auf den Informationen, die für die Anzahl von Wörtern in gegebenen linguistischen Objekten repräsentativ sind, basiert.

5. Verfahren nach Anspruch 4, wobei das Vergleichen ferner Folgendes umfasst:
Bestimmen, ob linguistische Objekte in der ersten Textdatenbank einzelne Wörter sind;
Vergleichen von einzelnen Wörtern des einen oder der mehreren Wörter, die via die Eingabeeinrichtung empfangen werden, mit den linguistischen Objekten, die in der ersten Textdatenbank gespeichert und einzelne Wörter sind; und
Bestimmen, ob ein oder mehrere linguistische Objektkandidaten der linguistischen Objekte, die einzelne Wörter sind, ausgegeben werden sollen, um mindestens einige des einen oder der mehreren Wörter, die via die Eingabeeinrichtung empfangen werden, zu ersetzen.

6. Verfahren nach Anspruch 5, wobei das Vergleichen ferner Folgendes umfasst:
Bestimmen, ob eine ausreichende Anzahl von linguistischen Objektkandidaten in den linguistischen Objekten, die einzelne Wörter sind, gefunden werden; und
wenn eine ausreichende Anzahl von linguistischen Objektkandidaten in den linguistischen Objekten, die einzelne Wörter sind, gefunden werden, ferner Durchführen von Folgendem:
Bestimmen, ob linguistische Objekte in der ersten Textdatenbank mehr als ein Wort aufweisen;
Vergleichen von Gruppen von Wörtern des einen oder der mehreren Wörter, die via die Eingabeeinrichtung empfangen werden, mit den linguistischen Objekten, die in der ersten Textdatenbank gespeichert sind und mehr als ein Wort aufweisen; und
Bestimmen, ob ein oder mehrere zusätzliche linguistische Objektkandidaten der linguistischen Objekte, die mehr als ein Wort aufweisen, ausgegeben werden sollen, um mindestens einige des einen oder der mehreren Wörter, die via die Eingabeeinrichtung empfangen werden, zu ersetzen.

7. Verfahren nach Anspruch 1, das ferner Folgendes umfasst:
Ausführen einer Anwendung in der Kommunikationsvorrichtung;
Durchführen des Bestimmens und des Aktualisierens, während die Anwendung ausgeführt wird.

8. Verfahren nach Anspruch 7, das ferner Folgendes umfasst:
Durchführen des Bestimmens, des Aktualisierens, des Empfangens und des Vergleichens, während die Anwendung ausgeführt wird.

9. Verfahren nach Anspruch 1, wobei das Vergleichen ferner das Bestimmen, ob es wahrscheinlicher ist, dass mindestens einige der zwei oder der mehreren linguistischen Objekte eine beabsichtigte Schreibung repräsentieren als mindestens einige des einen oder der mehreren Wörter, die via die Eingabeeinrichtung empfangen werden, umfasst.

10. Erste Kommunikationsvorrichtung (100), wobei die erste Kommunikationsvorrichtung Folgendes umfasst:
eine Eingabeeinrichtung (104, 108, 116, 118, 122, 124, 126) ;
einen oder mehrere Prozessoren (102);
einen oder mehrere Speicher (110, 114);
Anweisungen (128), die in dem einen oder den mehreren Speichern gespeichert sind und, wenn sie von dem einen oder den mehreren Prozessoren umgesetzt werden, bewirken, dass die Kommunikationsvorrichtung die folgenden Schritte durchführt:
Überwachen einer zweiten Textdatenbank auf das Entfernen von einem oder mehreren linguistischen Objekten, wobei die zweite Textdatenbank in einer zweiten Kommunikationsvorrichtung (600) gespeichert ist;
wenn ein oder mehrere linguistische Objekte aus der zweiten Textdatenbank entfernt wurden, Aktualisieren der ersten Textdatenbank derart, dass sie das eine oder die mehreren linguistischen Objekte, die aus der zweiten Textdatenbank entfernt wurden, nicht enthält;
Empfangen von einem oder mehreren Wörtern via die Eingabeeinrichtung; und
Vergleichen des einen oder der mehreren Wörter mit zwei oder mehreren linguistischen Objekten in der ersten Textdatenbank, um zu bestimmen, ob mindestens einige des einen oder der mehreren Wörter durch mindestens einige des einen oder der mehreren linguistischen Objekte in der ersten Textdatenbank ersetzt werden sollten,
wobei jedes linguistische Objekt ein jeweiliges Wort beinhaltet, wobei jedes Wort eine Kombination von aufeinanderfolgenden Zeichen oder Symbolen ist.

11. Kommunikationsvorrichtung nach Anspruch 10, wobei mindestens einige der zwei oder der mehreren linguistischen Objekte in der ersten Textdatenbank zwei oder mehrere Wörter umfassen.

12. Kommunikationsvorrichtung nach Anspruch 10, wobei die Anweisungen, die in dem einen oder den mehreren Speichern gespeichert sind, wenn sie von dem einen oder den mehreren Prozessoren umgesetzt werden, ferner bewirken, dass die Kommunikationsvorrichtung den folgenden Schritt durchführt:
Speichern von Informationen, die für die Anzahl von Wörtern in einem gegebenen linguistischen Objekt für mindestens einige linguistische Objekte in der ersten Textdatenbank repräsentativ sind, in der ersten Textdatenbank.

13. Kommunikationsvorrichtung nach Anspruch 12, wobei das Vergleichen des einen oder der mehreren Wörter mit zwei oder mehreren linguistischen Objekten in der ersten Textdatenbank mindestens teilweise auf den Informationen, die für die Anzahl von Wörtern in gegebenen linguistischen Objekten repräsentativ sind, basiert.

14. Kommunikationsvorrichtung nach Anspruch 13, wobei das Vergleichen ferner Folgendes umfasst:
Bestimmen, ob linguistische Objekte in der ersten Textdatenbank einzelne Wörter sind;
Vergleichen von einzelnen Wörtern des einen oder der mehreren Wörter, die via die Eingabeeinrichtung empfangen werden, mit den linguistischen Objekten, die in der ersten Textdatenbank gespeichert und einzelne Wörter sind; und
Bestimmen, ob ein oder mehrere linguistische Objektkandidaten der linguistischen Objekte, die einzelne Wörter sind, ausgegeben werden sollen, um mindestens einige des einen oder der mehreren Wörter, die via die Eingabeeinrichtung empfangen werden, zu ersetzen.

15. Kommunikationsvorrichtung nach Anspruch 14, wobei das Vergleichen ferner Folgendes umfasst:
Bestimmen, ob eine ausreichende Anzahl von linguistischen Objektkandidaten in den linguistischen Objekten, die einzelne Wörter sind, gefunden werden; und
wenn eine ausreichende Anzahl von linguistischen Objektkandidaten in den linguistischen Objekten, die einzelne Wörter sind, gefunden werden, ferner Durchführen von Folgendem:
Bestimmen, ob linguistische Objekte in der ersten Textdatenbank mehr als ein Wort aufweisen;
Vergleichen von Gruppen von Wörtern des einen oder der mehreren Wörter, die via die Eingabeeinrichtung empfangen werden, mit den linguistischen Objekten, die in der ersten Textdatenbank gespeichert sind und mehr als ein Wort aufweisen; und
Bestimmen, ob ein oder mehrere zusätzliche linguistische Objektkandidaten der linguistischen Objekte, die mehr als ein Wort aufweisen, ausgegeben werden sollen, um mindestens einige des einen oder der mehreren Wörter, die via die Eingabeeinrichtung empfangen werden, zu ersetzen.

16. Kommunikationsvorrichtung nach Anspruch 10, wobei die Anweisungen, die in dem einen oder den mehreren Speichern gespeichert sind, wenn sie von dem einen oder den mehreren Prozessoren umgesetzt werden, ferner bewirken, dass die Kommunikationsvorrichtung den folgenden Schritt durchführt:
Ausführen einer Anwendung in der Kommunikationsvorrichtung;
Durchführen des Bestimmens und des Aktualisierens, während die Anwendung ausgeführt wird.

17. Kommunikationsvorrichtung nach Anspruch 16, wobei die Anweisungen, die in dem einen oder den mehreren Speichern gespeichert sind, wenn sie von dem einen oder den mehreren Prozessoren umgesetzt werden, ferner bewirken, dass die Kommunikationsvorrichtung den folgenden Schritt durchführt:
Durchführen des Bestimmens, des Aktualisierens, des Empfangens und des Vergleichens, während die Anwendung ausgeführt wird.

18. Kommunikationsvorrichtung nach Anspruch 10, wobei das Vergleichen ferner das Bestimmen, ob es wahrscheinlicher ist, dass mindestens einige der zwei oder der mehreren linguistischen Objekte eine beabsichtigte Schreibung repräsentieren als mindestens einige des einen oder der mehreren Wörter, die via die Eingabeeinrichtung empfangen werden, umfasst.

19. Computerlesbares Medium, das Anweisungen umfasst, die, wenn sie von einem Computer umgesetzt werden, bewirken, dass der Computer die Schritte des Verfahrens nach einem der Ansprüche 1 bis 9 realisiert.

## Revendications

1. Procédé réalisé par un premier dispositif de communication (100), le premier dispositif de communication ayant un appareil d'entrée (104, 108, 116, 118, 122, 124, 126) et une mémoire (110, 114), dans lequel la mémoire a stocké, dans celle-ci, une première base de données textuelle comprenant une pluralité d'objets linguistiques, le procédé comprenant :
la surveillance d'une deuxième base de données textuelle pour le retrait d'un ou plusieurs objets linguistiques, dans lequel la deuxième base de données textuelle est stockée dans un deuxième dispositif de communication (600) ;
si un ou plusieurs objets linguistiques ont été retirés de la deuxième base de données textuelle, la mise à jour de la première base de données textuelle pour exclure les un ou plusieurs objets linguistiques retirés de la deuxième base de données textuelle ;
la réception d'un ou plusieurs mots via l'appareil d'entrée ; et
la comparaison des un ou plusieurs mots à deux objets linguistiques ou plus dans la première base de données textuelle, afin de déterminer si au moins certains des un ou plusieurs mots doivent être remplacés par au moins certains des deux objets linguistiques ou plus dans la première base de données textuelle,
dans lequel chaque objet linguistique comporte un mot respectif, chaque mot étant une combinaison de caractères ou de symboles consécutifs.

2. Procédé de la revendication 1, dans lequel au moins certains des deux objets linguistiques ou plus dans la première base de données textuelle comprennent deux mots ou plus.

3. Procédé de la revendication 1, comprenant en outre :
le stockage, dans la première base de données textuelle, d'informations représentatives du nombre de mots dans un objet linguistique donné pour au moins certains objets linguistiques dans la première base de données textuelle.

4. Procédé de la revendication 3, dans lequel la comparaison des un ou plusieurs mots à deux objets linguistiques ou plus dans la première base de données textuelle est basée au moins en partie sur les informations représentatives du nombre de mots dans des objets linguistiques donnés.

5. Procédé de la revendication 4, dans lequel la comparaison comprend en outre :
le fait de déterminer si des objets linguistiques quelconques dans la première base de données textuelle sont des mots isolés ;
la comparaison des mots isolés, provenant des un ou plusieurs mots reçus via l'appareil d'entrée, aux objets linguistiques stockés dans la première base de données textuelle qui sont des mots isolés ; et
le fait de déterminer s'il faut délivrer un ou plusieurs objets linguistiques candidats à partir des objets linguistiques qui sont des mots isolés, pour remplacer au moins certains des un ou plusieurs mots reçus via l'appareil d'entrée.

6. Procédé de la revendication 5, dans lequel la comparaison comprend en outre :
le fait de déterminer si un nombre suffisant d'objets linguistiques candidats sont trouvés à partir des objets linguistiques qui sont des mots isolés ; et
si un nombre insuffisant d'objets linguistiques candidats sont trouvés à partir des objets linguistiques qui sont des mots isolés, la réalisation, en outre, des étapes suivantes :
déterminer si des objets linguistiques quelconques dans la première base de données textuelle ont plus d'un mot ;
comparer des groupes de mots, provenant des un ou plusieurs mots reçus via l'appareil d'entrée, aux objets linguistiques stockés dans la première base de données textuelle qui ont plus d'un mot ; et
déterminer s'il faut délivrer un ou plusieurs objets linguistiques candidats supplémentaires à partir des objets linguistiques qui ont plus d'un mot, pour remplacer au moins certains des un ou plusieurs mots reçus via l'appareil d'entrée.

7. Procédé de la revendication 1, comprenant en outre :
l'exécution d'une application dans le dispositif de communication ;
la réalisation de la détermination et de la mise à jour pendant l'exécution de l'application.

8. Procédé de la revendication 7, comprenant en outre :
la réalisation de la détermination, de la mise à jour, de la réception et de la comparaison pendant l'exécution de l'application.

9. Procédé de la revendication 1, dans lequel la comparaison comprend en outre le fait de déterminer si au moins certains des deux objets linguistiques ou plus sont plus susceptibles de représenter une orthographe voulue qu'au moins certains des un ou plusieurs mots reçus via l'appareil d'entrée.

10. Premier dispositif de communication (100), le premier dispositif de communication comprenant :
un appareil d'entrée (104, 108, 116, 118, 122, 124, 126) ;
un ou plusieurs processeurs (102) ;
une ou plusieurs mémoires (110, 114) ;
des instructions (128) stockées dans les une ou plusieurs mémoires, qui, lorsqu'elles sont exécutées par les un ou plusieurs processeurs, amènent le dispositif de communication à réaliser les étapes consistant à :
surveiller une deuxième base de données textuelle pour le retrait d'un ou plusieurs objets linguistiques, dans lequel la deuxième base de données textuelle est stockée dans un deuxième dispositif de communication (600) ;
si un ou plusieurs objets linguistiques ont été retirés de la deuxième base de données textuelle, mettre à jour la première base de données textuelle pour exclure les un ou plusieurs objets linguistiques retirés de la deuxième base de données textuelle ;
recevoir un ou plusieurs mots via l'appareil d'entrée ; et
comparer un ou plusieurs mots à deux objets linguistiques ou plus dans la première base de données textuelle, afin de déterminer si au moins certains des un ou plusieurs mots doivent être remplacés par au moins certains des deux objets linguistiques ou plus dans la première base de données textuelle,
dans lequel chaque objet linguistique comporte un mot respectif, chaque mot étant une combinaison de caractères ou de symboles consécutifs.

11. Dispositif de communication de la revendication 10, dans lequel au moins certains des deux objets linguistiques ou plus dans la première base de données textuelle comprennent deux mots ou plus.

12. Dispositif de communication de la revendication 10, dans lequel les instructions stockées dans les une ou plusieurs mémoires, lorsqu'elles sont exécutées par les un ou plusieurs processeurs, amènent en outre le dispositif de communication à réaliser l'étape consistant à :
stocker dans la première base de données textuelle des informations représentatives du nombre de mots dans un objet linguistique donné pour au moins certains objets linguistiques dans la première base de données textuelle.

13. Dispositif de communication de la revendication 12, dans lequel la comparaison des un ou plusieurs mots à deux objets linguistiques ou plus dans la première base de données textuelle est basée au moins en partie sur les informations représentatives du nombre de mots dans des objets linguistiques donnés.

14. Dispositif de communication de la revendication 13, dans lequel la comparaison comprend en outre :
le fait de déterminer si des objets linguistiques quelconques dans la première base de données textuelle sont des mots isolés ;
la comparaison des mots isolés, provenant des un ou plusieurs mots reçus via l'appareil d'entrée, aux objets linguistiques stockés dans la première base de données textuelle qui sont des mots isolés ; et
le fait de déterminer s'il faut délivrer un ou plusieurs objets linguistiques candidats à partir des objets linguistiques qui sont des mots isolés pour remplacer au moins certains des un ou plusieurs mots reçus via l'appareil d'entrée.

15. Dispositif de communication de la revendication 14, dans lequel la comparaison comprend en outre :
le fait de déterminer si un nombre suffisant d'objets linguistiques candidats sont trouvés à partir des objets linguistiques qui sont des mots isolés ; et
si un nombre insuffisant d'objets linguistiques candidats sont trouvés à partir des objets linguistiques qui sont des mots isolés, la réalisation, outre, de ce qui suit :
déterminer si des objets linguistiques quelconques dans la première base de données textuelle ont plus d'un mot ;
comparer des groupes de mots, provenant des un ou plusieurs mots reçus via l'appareil d'entrée, aux objets linguistiques stockés dans la première base de données textuelle qui ont plus d'un mot ; et
déterminer s'il faut délivrer un ou plusieurs objets linguistiques candidats supplémentaires à partir des objets linguistiques qui ont plus d'un mot, pour remplacer au moins certains des un ou plusieurs mots reçus via l'appareil d'entrée.

16. Dispositif de communication de la revendication 10, dans lequel les instructions stockées dans les une ou plusieurs mémoires, lorsqu'elles sont exécutées par les un ou plusieurs processeurs, amènent en outre le dispositif de communication à réaliser les étapes consistant à :
exécuter une application dans le dispositif de communication ;
réaliser la détermination et la mise à jour pendant l'exécution de l'application.

17. Dispositif de communication de la revendication 16, dans lequel les instructions stockées dans les une ou plusieurs mémoires, lorsqu'elles sont exécutées par les un ou plusieurs processeurs, amènent en outre le dispositif de communication à réaliser l'étape consistant à :
réaliser la détermination, la mise à jour, la réception et la comparaison pendant l'exécution de l'application.

18. Dispositif de communication de la revendication 10, dans lequel la comparaison comprend en outre le fait de déterminer si au moins certains des deux objets linguistiques ou plus sont plus susceptibles de représenter une orthographe voulue qu'au moins certains des un ou plusieurs mots reçus via l'appareil d'entrée.

19. Support lisible par ordinateur comprenant des instructions qui, lorsqu'elles sont exécutées par un ordinateur, amènent l'ordinateur à effectuer les étapes du procédé de l'une des revendications 1 à 9.
